# EUROPEAN PATENT APPLICATION

(11) **EP 4 741 180 A1**
(43) Date of publication of application: **13.05.2026**
(21) Application number: 25207232.7
(22) Date of filing: 07.10.2025
(51) Int. Cl.: B60C 23/04, B60C 11/24

(54) **TIRE SENSOR WITH ELASTOMERIC CONNECTORS AND TIRE**

(30) Priority: 29.10.2024 US 202463713344 P; 01.10.2025 US 202519346658
(71) Applicant: The Goodyear Tire & Rubber Company, Akron, OH 44316 (US)
(72) Inventor: ZHAO, Junling, Hudson, 44236 (US); WEST, Jeffrey McKay, Uniontown, 44685 (US); GLICKSTEIN, Jarred, Akron, 44316 (US); MIDDELBERG, Jason Mark, L-7450 Lintgen (LU); DECOSTER, Yves Francois Claude, B-6760 Ethe (BE)
(74) Representative: Kutsch, Bernd

(57) **Abstract**

A sensor unit for a tire (103) or for measuring one or more parameters associated with a tire (103) is disclosed. The sensor unit (200) comprises: (i) a printed circuit board (210); an electrical component (272, 274); and an elastomer connector (250) in contact with the printed circuit board (210) and the electrical component (272, 274); or (ii) a first electrical component (272); a second electrical component (274); and an elastomer connector (250) in contact with the first electrical component (272) and the second electrical component (274). The elastomer connector (250) comprises a plurality of conductive layers (258) and a plurality of nonconductive layers (256) disposed alternatingly among the plurality of conductive layers (258) along a length of the elastomer connector (250). Also disclosed is a tire comprising such a sensor unit (200).

## Description

### BACKGROUND

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

Often, it is desirable to collect electronic data about the conditions in and around the tire. The electronic data may be collected by one or more sensors that are incorporated into the tire during manufacturing, or affixed to a suitable portion of the tire before or after curing. Such data can be communicated to the various different electronic systems of the vehicle, such as vehicle stability and/or braking systems, in order to provide improved control of the vehicle, monitor or track driving behavior, monitor tire conditions, or collect other suitable data related to the tire.

### SUMMARY OF THE INVENTION

The invention relates to a sensor unit in accordance with claim 1, and to a tire in accordance with claim 11 or 12, respectively.

Dependent claims refer to preferred aspects of the invention.

In one aspect of the invention, a sensor unit for a tire or for measuring one or more parameters associated with a tire is provided, the sensor unit comprising:
(i) a printed circuit board;
   an electrical component; and
   an elastomer connector in contact with the printed circuit board and the electrical component; or
(ii) a first electrical component;
   a second electrical component; and
   an elastomer connector in contact with the first electrical component and the second electrical component;
wherein the elastomer connector comprises a plurality of conductive layers and a plurality of nonconductive layers disposed alternatingly among the plurality of conductive layers along a length of the elastomer connector.

In another aspect of the invention, tire comprising such a sensor unit is provided wherein the sensor unit is mounted along at least a portion of an innerliner of the tire or is disposed at least partially within a structure of the tire.

In yet a further aspect of the invention, a tire comprising an innerliner and a sensor affixed to the innerliner is provided wherein the sensor comprises:
a printed circuit board;
a first conductive layer comprising at least one of charged silicone, carbon, graphite, or silver;
a second conductive layer comprising at least one of charged silicone, carbon, graphite, or silver;
a nonconductive layer disposed between the first conductive layer and the second conductive layer, the nonconductive layer comprising a neutral silicone; and
an electronic component, the first conductive layer being in contact with the printed circuit board and the electronic component, and the second conductive layer being in contact with the printed circuit board and the electronic component.

In a preferred aspect of the tire, each of the plurality of electronic components comprises at least one of a wire, a power source, a piezoelectric sensor, a strain sensor, a wear sensor, or an energy harvester.

In a preferred aspect of the tire, each respective elastomeric connector of the plurality of elastomeric connectors is deflected between 10% and 15% in compression between a respective electronic component and the printed circuit board.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is a cross-sectional perspective view of a tire, with a sensor unit disposed adjacent the innerliner of a tire according to various embodiments of the present invention.
FIG. 2 is an example of a detail view of a sensor unit according to various embodiments of the present invention.
FIG. 3 is a further detail view of the sensor unit of FIG. 2.
FIG. 4 is a detail view of a portion of an elastomeric connector according to various embodiments of the present invention.
FIG. 5 is a side cutaway view of an elastomeric connector sandwiched between two electronic components according to various embodiments of the present invention.
FIG. 6 is a side cutaway view of an elastomeric connector sandwiched between a first electronic components and a set of second electronic components according to various embodiments of the present invention.
FIG. 7 is a side cutaway view of a first elastomeric connector sandwiched between a first electronic component and a second electronic component and a second elastomeric connector sandwiched between a third electronic component according to various embodiments of the present invention.
FIG. 8 is a side cutaway view of a wire treadwear sensor according to various embodiments of the present invention.
FIG. 9 is a side cutaway view of a wire treadwear sensor according to various other embodiments of the present invention.
FIG. 10 is a cutaway view of a wire treadwear sensor mounted to an Innerliner of a tire according to various embodiments of the present invention.

### DEFINITIONS

"Carcass" means the tire structure apart from the belt structure, tread, undertread, and sidewall rubber over the plies, but including the beads.

"Innerliner" means the layer or layers of elastomer or other material that form the inside surface of a tubeless tire and that contain the inflating fluid within the tire.

"Radially outward" and "radially outwardly" refer to a radial direction that is away from the central axis of rotation of the tire.

"Radial" and "radially" mean lines or directions that are perpendicular to the axis of rotation of the tire.

### DETAILED DESCRIPTION OF PREFERRED EMBODIMENTS OF THE INVENTION

Disclosed herein are various examples related to tire sensor apparatuses. In one example, an apparatus includes a tire sensor that is at least partially incorporated into a tire. In particular examples, the tire sensor is disposed against and/or affixed to an innerliner of the tire. In other examples, the tire sensor is at least partially integrated into a suitable structure of the tire. In such examples, the tire sensor can, for example, be integrated into any suitable portion of a tire carcass, sidewall, tread, etc.

In particular examples, the tire sensor includes at least a first electronic component and a second electronic component. In such examples, the first and second electronic components can be connected via an elastomeric connector. The elastomeric connecter, in some examples, includes alternating conductive and non-conductive elastomeric layers. In some examples, the elastomeric connector is configured to provide conductivity between the first and second electronic components. The conductive layers in the elastomeric connector can, for example, provide a conductive pathway between the first electronic component and the second electronic component to provide an electrical connection between the first electronic component and the second electronic component.

By using elastomeric connectors to connect one or more of the various electronic components of a tire sensor, durability of the tire sensor can be improved. In particular, the use of elastomeric connectors can improve the flexibility of tire sensors, increasing sensor life, particularly when compared to tire sensors that utilize more typical electric connections such as, for example, soldering. In some examples, either of the first and second electronic connectors can include any suitable component of a tire sensor. For example, either of the first and second electronic connectors can include one or more wires, one or more power supplies, one or more piezoelectric sensors, one or more strain sensors, one or more wear sensors, and/or one or more energy harvesters. In other examples, either of the first and second electronic components can comprise one or more printed circuit boards, one or more sensor units, one or more processing units, one or more communication units, one or more transmitters, one or more receivers, and/or any other suitable sensor nodes or portions thereof.

In the following discussion, a general description of the system and its components is provided, followed by a discussion of the operation of the same. Although the following discussion provides illustrative examples of the operation of various components of the present invention, the use of the following illustrative examples does not exclude other implementations that are consistent with the principals disclosed by the following illustrative examples.

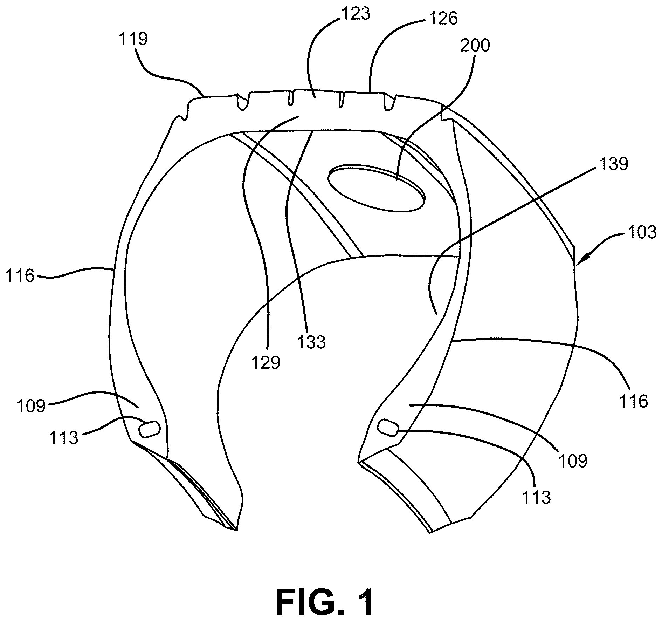

Turning to FIG. 1, shown is a cross-sectional view of the tire 103 according to various embodiments. The tire 103 includes a pair of bead areas 109, each one of which is formed with a bead core 113 that is embedded in the respective bead area 109. Each one of a pair of sidewalls 116 extends radially outwardly from a respective bead area 109 to a ground-contacting tread 119. The tread 119 is formed with multiple tread elements or tread blocks 123 and defines a radially outer surface 126. The tire 103 is reinforced by a carcass 129 that toroidally extends from one bead area 109 to the other bead area 109. An innerliner 133 is formed on the inner or inside surface of the carcass 129. The tire 103 is mounted on the flange of a wheel or rim (not pictured) forming an internal cavity 139.

According to various examples, one or more sensors or sensor units 200 are mounted to the tire 103. In the example shown in FIG. 1, a sensor or sensor unit 200 is mounted adjacent the innerliner 133 of the tire 103. In other examples, each of the one or more sensors or sensor units are mounted and/or disposed on, within, or at least partially within any suitable portion of the tire. For example, in some examples, the one or more sensors or sensor units are disposed on or at least partially embedded within any suitable portion of either bead area 109, either of the pair of sidewalls 116, the carcass 129, any of the tread blocks 123, on any of the ground-contacting treads 119, or in or on any other suitable portion or portions of the tire 103.

Each of the one or more sensors or sensor units 200 detects certain real-time parameters of the tire 103. In some examples, the one or more sensors or sensor units 200 can include any suitable further sensor units such as one or more piezoelectric sensors, one or more strain sensors, one or more piezoelectric sensors, one or more wear sensors, one or more energy harvesters and/or other type of sensor. In some examples, the one or more sensors or sensor units 200 include one or more pressure sensors to sense the inflation pressure within the cavity 139 of the tire 103, a temperature sensor to sense the temperature of the tire 103 and/or the temperature in the cavity 139 of the tire 103, and/or any other suitable sensor for sensing any suitable parameter associated with the tire 103 or a vehicle on which the tire is mounted.

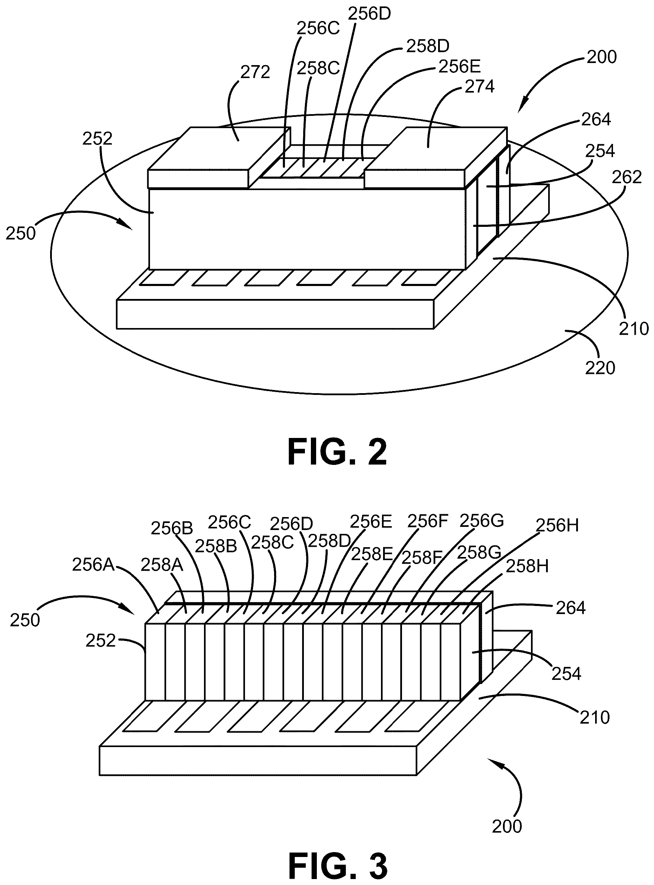

Turning to FIG. 2, an exemplary sensor or sensor unit 200 is shown. As may be understood from FIG. 2, the sensor or sensor unit 200 can include a sensor container 220, a printed circuit board 210, an elastomeric connector 250, a first electronic component 272, and a second electronic component 274.

In some examples, the sensor container 220 comprises a suitable housing for receiving various components of the sensor or sensor unit 200 described herein. The various electronic components described herein can be disposed within the container housing to form a sensor node that can be affixed to or at least partially embedded within any suitable portion of the tire 103. In some examples, the sensor container 220 is at least partially flexible and comprises any suitable elastomer or polymer.

As may be understood from FIG. 2, the sensor or sensor unit 200 comprises at least one printed circuit board 210. In some examples, the printed circuit board 210 includes a flexible printed circuit board 210. In various examples, the printed circuit board 210 comprises any suitable electronic components such as one or more processors, resistors, transistors, capacitors, inductors, diodes, and/or other components of the sensing circuitry. In some examples, the printed circuit board 210 is configured to provide one or more electrical connections between various components that make up the sensor or sensor unit 200.

As further shown in FIG. 2 the sensor or sensor unit 200 comprises at least one elastomeric connector 250 that comprises a plurality of alternating nonconductive layers 256 and conductive layers 258 disposed between a first support 262 and a second support 264 (e.g., nonconductive layers 256C-E, conductive layers 258C-D). As may be understood from this figure, each of the first support 262 and the second support 264 can be configured to support the set of nonconductive layers 256 and conductive layers 258 between the first support 262 and the second support 264. In some examples, each of the first support 262 and the second support 264 can provide an insulation barrier between the set of nonconductive layers 256 and conductive layers 258 and any adjoining components. In various examples, each nonconductive layer 256 is made of a neutral silicone (i.e., a silicone that is not charged or electrically chargeable). The neutral silicone, in some examples, provides resistance to degradation due to aging, chemical stability, and beneficial mechanical properties related to shock absorption and vibration. Each of the conductive layers 258 can comprise any suitable charged silicone, carbon, graphite, silver, or other suitable conductive material that provides at least partial flexibility. Through the use of elastomeric connectors 250, various electric connectors utilized within the sensor or sensor unit 200 may be more resilient against breakage, corrosion, or other damage from operation of the tire. This may, in turn, result in improved sensor performance or life. This may be particularly desirable for sensors that are at least partially embedded within a tire structure, as replacing or repairing such sensors may be particularly difficult.

In the example shown in FIG. 2, the sensor or sensor unit 200 comprises a first electronic component 272 and a second electronic component 274. As may be understood in light of this invention, either of the first electronic component 272 or the second electronic component 274 can include any suitable electronic component. For example, each of the first electronic component 272 and second electronic component 274 can include any suitable electronic component or components such as one or more wires, one or more power supplies, one or more strain sensors, one or more piezoelectric sensors, one or more wear sensors, one or more energy harvesters, one or more printed circuit boards, one or more sensor units, one or more processing units, one or more communication units, one or more transmitters, one or more receivers, or any other suitable sensor components or portions thereof. In particular examples, the first electronic component 272 and the second electronic component 274 are in contact with at least a portion of the elastomeric connector 250 such that at least one conductive layer 258 provides an electrical conduit between each of the first electronic component 272 and the second electronic component 274 to the printed circuit board 210.

In this way, the elastomeric connector 250 provides an electrical connection between each of the first electronic component 272 and the second electronic component 274 and the printed circuit board 210 that is at least partially flexible. The flexible nature of the connection can, for example, result from the elastic properties of the elastomeric connector 250 (i.e., from the elastic properties of each of conductive layer 258, each nonconductive layer 256, and each support 262, 264). In some examples, the mechanical properties of the elastomeric connector 250 can provide improved resilience to the one or more electrical connections provided by any particular elastomeric connector 250. Because of the forces, pressure, and other externalities experienced by a particular sensor 200 during operation of a tire 103 in which it is disposed, the use of elastomeric connectors such as those described herein may improve longevity of such sensors, improve flexibility of such sensors, and improve dynamic durability of such sensors. This improved durability may be evident in comparison to sensors that utilize more rigid or inflexible electrical connections such as soldering.

In some examples, the elastomeric connector 250 is mechanically assembled (i.e., without soldering) through compression. In this way, the elastomeric connector 250, in some examples, provides an electronic connection between two electronic components, such as the printed circuit board 210 and the first electronic component 272, even without precise alignment of the elastomeric connector 250. In some aspects, the elastomeric connector 250 deflects between about 10% and about 15% when sandwiched between two electronic components such as the printed circuit board 210 and the first electronic component 272. In this way, the elastomeric connector 250 forms a substantially gas-tight seal and conductive pathway between the printed circuit board 210 and the first electronic component 272.

Although in the example shown in this figure, a single elastomeric connector 250 is shown, it should be understood that in other examples, the sensor 200 can include any suitable number of elastomeric connectors 250. In various examples, each elastomeric connector 250 can, for example, be disposed between any suitable electronic component of the sensor 200 to provide an electronic connection between the electronic components between which the elastomeric connector 250 is disposed, or between a particular electronic component and a printed circuit board 210.

Similarly, in the example shown in FIG. 2, a first electronic component 272 and a second electronic component 274 are shown. In other examples, the sensor or sensor unit 200 can comprise any suitable number or combination of electronic components. In still other examples, the sensor or sensor unit 200 includes a single electronic component that extends from the first end 252 to the second end 254. In such examples, a particular electronic component can include a size that corresponds to a size of the elastomeric connector 250 to which it is engaged.

Although each of the first electronic component 272 and second electronic component 274 are depicted in FIG. 2 as simple rectangular prisms, it should be understood that the first electronic component 272, second electronic component 274, and any other electronic component described herein, can include any other suitable shape, size, orientation, etc. Additionally, it should be understood that FIG. 2 depicts an exemplary sensor or sensor unit 200 including exemplary components. In other examples, other components described herein include any other suitable size or shape, whether in absolute terms or relative to one another.

FIG. 3 depicts the sensor or sensor unit 200 of FIG. 2 with the sensor container 220, the first electronic component 272, the second electronic component 274, and the first support 262 removed. As may be further understood from this figure, each of the nonconductive layers 256 and the conductive layers 258 are substantially parallel, extending from the first end 252 to the second end 254 abutting each adjacent electronic component. In the example shown in this figure, the sensor or sensor unit 200 comprises eight nonconductive layer 256 (nonconductive layer 256A-H) and eight conductive layer 258 (conductive layer 258A-H). Each layer is sandwiched between two adjacent layers. In still other examples, a particular elastomeric connector 250 can include any suitable number of nonconductive layers 256 and/or conductive layers 258.

As shown in FIG. 3, each nonconductive layer 256 and conductive layer 258 is disposed substantially perpendicularly to the printed circuit board 210 and at least a portion of each of the first electronic component 272 and the second electronic component 274. In this way, each conductive layer 258 can provide a direct electrical connection between any components in contact with opposing sides of a particular conductive layer 258. As shown in these figures, each nonconductive layer 256 and conductive layer 258 are substantially structurally identical. In the example shown in these figures, each nonconductive layer 256 and conductive layer 258 is substantially rectangular. In particular examples, each nonconductive layer 256 and conductive layer 258 can include a thickness of from 0.01 mm to 0.10 mm such as 0.05 mm.

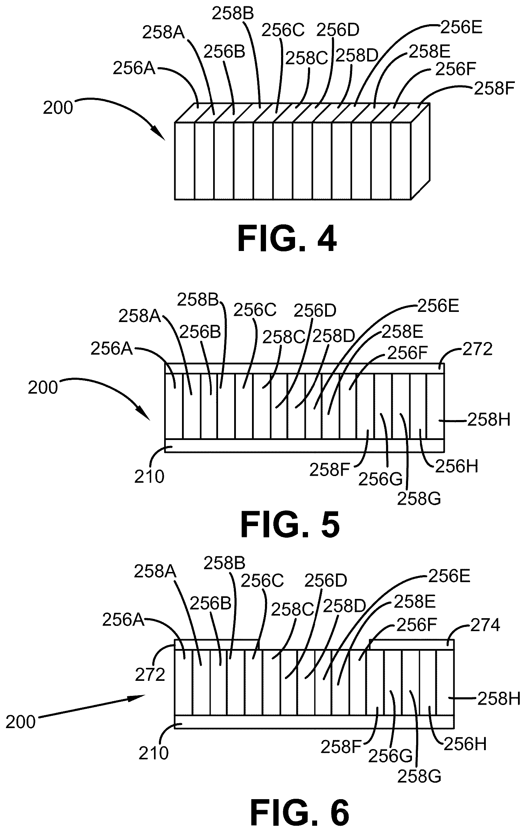

In some examples, either of the second support 264 or the first support 262 can be optional. For example, FIG. 4 depicts a set of nonconductive layer 256 and conductive layer 258 without any side support or insulating barrier.

FIG. 4 depicts an elastomeric connector 250 with an aligned set of nonconductive layer 256 and conductive layer 258 (e.g., nonconductive layer 256A-F and conductive layer 258A-F). As may be further understood from this figure, the set of nonconductive layer 256 and conductive layer 258 form a substantially rectangular prism and extend from a first end 252 to a second end 254. In some examples, the set of nonconductive layer 256 and conductive layer 258 can include a particular length.

Turning to FIG. 5, a side view of an exemplary elastomeric connector 250 is shown. In the example shown in this figure, the elastomeric connector 250 provides electrical connections via any of the conductive layer 258 (e.g., conductive layer 258-H) between the printed circuit board 210 and a first electronic component 272. As may be understood from this figure, in various examples, the elastomeric connector 250 is sized to correspond to a size of the first electronic component 272 for which it is providing a connection to the printed circuit board 210.

FIG. 6 depicts yet another example of a sensor or sensor unit 200 including an elastomeric connector 250 that substantially corresponds in length with the printed circuit board 210, and a plurality of electronic components (e.g., first electronic component 272 and second electronic component 274) disposed on an opposing side of the elastomeric connector 250. As shown in this figure, in some examples, one or more electronic components can form an electrical connection with a printed circuit board 210 via a portion of a particular elastomeric connector 250.

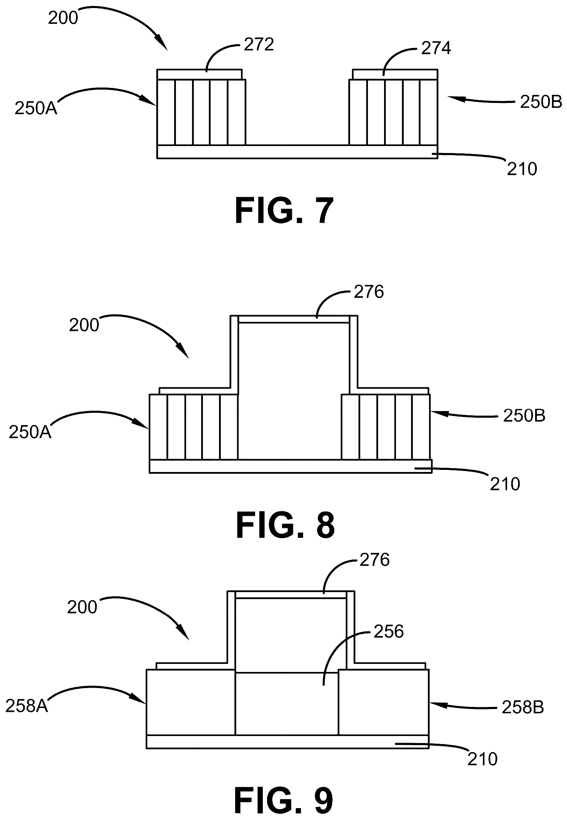

In the example shown in FIG. 7, the sensor or sensor unit 200 comprises at least a first and second elastomeric connector 250 (e.g., elastomeric connector 250A and elastomeric connector 250B) for providing an electrical connection between the printed circuit board 210 and a respective electronic component (e.g., first electronic component 272 and/or second electronic component 274). As may be understood from this figure, in various examples, individual electronic components that make up a sensor or sensor unit 200 may be electrically connected via individual elastomeric connectors. For example, each of one or more processors, resistors, transistors, capacitors, inductors, diodes, or other components of the sensing circuitry may be electrically connected to a printed circuit board 210 via a respective elastomeric connector 250. In this way, each elastomeric connector 250 can provide improved resilience to each electrical connection in the sensor or sensor unit 200, reducing a likelihood of a failure of any individual electrical connection. This may, for example, reduce a failure rate of tire sensors that utilize elastomeric connectors in place of traditional electric connections.

FIG. 8 depicts an example of a sensor or sensor unit 200 including a first elastomeric connector 250A and a second elastomeric connector 250B. The sensor or sensor unit 200 further comprises a wire 276 that extends between the first elastomeric connector 250A and the second elastomeric connector 250B. In the example shown in this figure, the sensor or sensor unit 200 comprises an elastomeric wire treadwear sensor. As may be understood from FIG. 8, the sensor or sensor unit 200 is configured to detect treadwear in the tire by, for example, detecting a break in the wire 276. In some examples, the wire 276 is embedded within a tread cap of the tire at a particular depth. When the tread wears to the particular depth, the wire 276 will be broken, and, in response the sensor 200 sends a signal indicating of the worn treadwear depth.

FIG. 9 depicts a sensor or sensor unit 200 according to yet another example. In the example shown in this figure, as in FIG. 9, the sensor or sensor unit 200 comprises an elastomeric wire treadwear sensor. In this example, the elastomeric connector 250 comprises a first conductive layer 258A, a second conductive layer 258B spaced apart from the conductive layer 258A and a nonconductive layer 256 disposed between the first conductive layer 258A and the second conductive layer 258B. In the example, shown in this figure, the wire 276 extends along and is in electrical contact with at least a portion of the first conductive layer 258A. The wire 276 further extends along and is in electrical contact with at least a portion of the second conductive layer 258B. A central portion of the wire 276 extends radially outward from the conductive layer 258A and the conductive layer 258B (e.g., into a tread portion of the tire), avoiding the nonconductive layer 256 disposed between the conductive layer 258A and the conductive layer 258B.

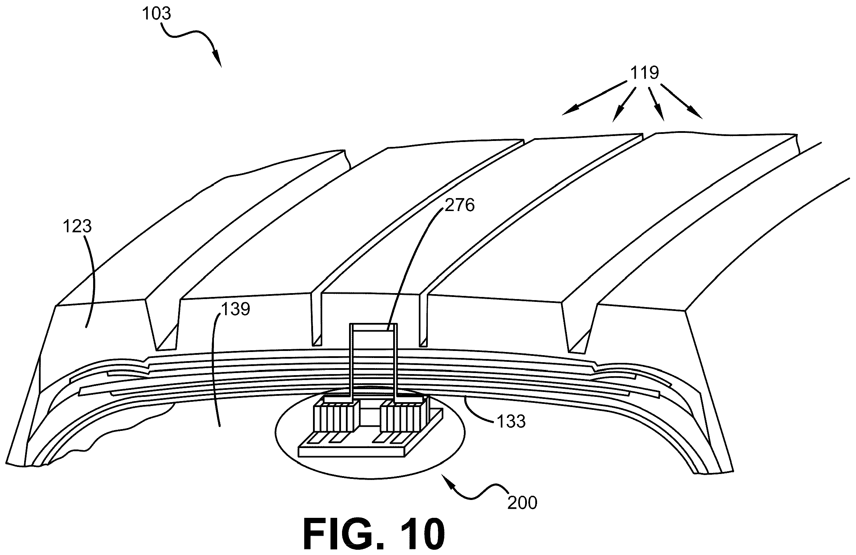

FIG. 10 depicts a cutaway view of the wire treadwear sensor of FIG. 8 disposed on an innerliner 133 of the tire within the tire cavity 139, with the wire 276 extending at least partially into at least a particular ground-contacting tread 119 of the tire 103 to a particular depth.

In still other examples, the wire can extend through a plurality of the ground-contacting treads 119. In other examples, the sensor or sensor unit 200 can comprise a plurality of wires, each extending into a respective ground-contacting tread 119 to a particular depth. In such examples, the sensor or sensor unit 200 can be configured to detect wear of any individual tread 119 to the particular depth at which the wire 276 is disposed in the individual tread 119.

## Claims

1. A sensor unit for a tire (103) or for measuring one or more parameters associated with a tire (103), the sensor unit (200) comprising:
(i) a printed circuit board (210);
an electrical component (272, 274); and
an elastomer connector (250) in contact with the printed circuit board (210) and the electrical component (272, 274); or
(ii) a first electrical component (272);
a second electrical component (274); and
an elastomer connector (250) in contact with the first electrical component (272) and the second electrical component (274);
wherein the elastomer connector (250) comprises a plurality of conductive layers (258) and a plurality of nonconductive layers (256) disposed alternatingly among the plurality of conductive layers (258) along a length of the elastomer connector (250).

2. The sensor unit of claim 1, wherein the electrical component (272, 274) or the first and/or the second electrical component comprises at least one of a wire, a power source, a piezoelectric sensor, a strain sensor, a wear sensor, or an energy harvester.

3. The sensor unit of claim 1 or 2 or, wherein:
the plurality of conductive layers (258) comprise at least one of charged silicone, carbon, graphite, or silver; and/or
the plurality of nonconductive layers (256) comprise neutral silicone.

4. The sensor unit of at least one of the previous claims, wherein the elastomer connector (250) is deflected between 10% and 15% in compression between the electrical component (272, 274) and the printed circuit board (210) or wherein the elastomer connector (250) is deflected between 10% and 15% in compression between the first electrical component (272) and the second electrical (274) component.

5. The sensor unit of at least one of the previous claims, wherein:
the elastomer connector (250) is a first elastomer connector of a plurality of elastomer connectors;
the electrical component (272, 274) is a first electrical component of a plurality of electrical components; and
each respective electrical component of the plurality of electrical components is electrically connected to at least a second respective electrical component of the plurality of electrical components via at least one respective elastomer connector (250) of the plurality of elastomer connectors.

6. The sensor unit of at least one of the previous claims, wherein the sensor unit (200) is mounted along at least a portion of an innerliner (133) of the tire (103).

7. The sensor unit of at least one of the previous claims, wherein the sensor unit (200) is disposed at least partially within a structure of the tire (103).

8. The sensor unit of at least one of the previous claims, wherein each of the first electrical component and the second electrical component comprise at least one of a printed circuit board, wire, a power source, a piezoelectric sensor, a strain sensor, a wear sensor, or an energy harvester.

9. The sensor unit of at least one of the previous claims, wherein:
the elastomer connector (250) comprises a first support (262) and second support (264); and wherein the plurality of conductive layers (258) and the plurality of nonconductive layers (256) are sandwiched between the first support (262) and the second support (264).

10. The sensor unit of at least one of the previous claims, wherein:
the sensor unit (200) comprises a wire treadwear sensor;
the first electrical component (272) is a printed circuit board (210);
the second electrical component (274) is a wire (276);
the elastomer connector (250) is a first elastomeric connector;
the sensor unit (200) comprises a second elastomeric connector spaced apart from the first elastomeric connector;
the second elastomeric connector is connected to the printed circuit board (210) and the wire (276); and
the wire (276) is at least partially disposed within at least one ground-contacting tread (119) of the tire (103).

11. A tire comprising the sensor unit (200) in accordance with at least one of the previous claims, the sensor unit (200) being mounted along at least a portion of an innerliner (133) of the tire (103) or being disposed at least partially within a structure of the tire (103).

12. A tire comprising an innerliner (133) and a sensor (200) affixed to the innerliner (133), the sensor (200) comprising:
a printed circuit board (210);
a first conductive layer (258A) comprising at least one of charged silicone, carbon, graphite, or silver;
a second conductive layer (258B) comprising at least one of charged silicone, carbon, graphite, or silver;
a nonconductive layer (256B) disposed between the first conductive layer (258A) and the second conductive layer (258B), the nonconductive layer (256B) comprising a neutral silicone; and
an electronic component (272, 274), the first conductive layer (258A) being in contact with the printed circuit board (210) and the electronic component (272, 274), and the second conductive layer (258B) being in contact with the printed circuit board (210) and the electronic component (272, 274).

13. The tire of claim 12, wherein the sensor (200) is a wire treadwear sensor and the first electronic component is a wire (276) and wherein the wire (276) is at least partially disposed within at least one ground-contacting tread (119) of the tire (103).

14. The tire of 12, wherein the first electronic component comprises at least one of a resistor, a transistor, a capacitor, an inductor, or a diode.

15. The tire of 12, 13 or 14, wherein:
at least the first conductive layer (258A), the second conductive layer (258B), and the first nonconductive layer (256B) form a first elastomeric connector;
the sensor (200) comprises a plurality of electronic components (272, 274) and a plurality of elastomeric connectors (250); and
each respective electronic component of the plurality of electronic components is connected to the printed circuit board (210) via at least one respective elastomeric connector of the plurality of elastomeric connectors (250).
